(19) **Europäisches Patentamt / European Patent Office / Office européen des brevets**

(11) **EP 1 129 538 B1**

(12) **FASCICULE DE BREVET EUROPEEN**

(45) Date de publication et mention de la délivrance du brevet:
**10.01.2007 Bulletin 2007/02**

(21) Numéro de dépôt: **99972391.9**

(22) Date de dépôt: **15.11.1999**

(51) Int Cl.:
*H04L 1/06* (2006.01)   *H04B 7/08* (2006.01)

(86) Numéro de dépôt international:
**PCT/FR1999/002799**

(87) Numéro de publication internationale:
**WO 2000/030290 (25.05.2000 Gazette 2000/21)**

(54) **DISPOSITIF ET PROCEDE DE RECEPTION A AU MOINS DEUX VOIES DE RECEPTION, ET UTILISATION CORRESPONDANTE**

EINRICHTUNG UND VERFAHREN ZUM EMPFANG MIT WENIGSTENS ZWEI EMPFANGSKANÄLEN, SOWIE ENTPRECHENDE VERWENDUNG

DEVICE AND METHOD FOR RECEIVING WITH AT LEAST TWO RECEPTION CHANNELS, AND CORRESPONDING USE

(84) Etats contractants désignés:
**AT BE CH CY DE DK ES FI FR GB GR IE IT LI LU MC NL PT SE**

(30) Priorité: **13.11.1998 FR 9814438**

(43) Date de publication de la demande:
**05.09.2001 Bulletin 2001/36**

(73) Titulaires:
- **FRANCE TELECOM**
  **75015 Paris (FR)**
- **TELEDIFFUSION DE FRANCE**
  **75732 Paris Cédex 15 (FR)**

(72) Inventeurs:
- **LAUNAY, Erwan**
  **F-35000 Rennes (FR)**

- **SUEUR, Bertrand**
  **F-35135 Chantepie (FR)**

(74) Mandataire: **Vidon, Patrice et al**
**Cabinet Vidon**
**16 B, rue Jouanet - B.P. 90333**
**Technopole Atalante**
**35703 Rennes Cedex 7 (FR)**

(56) Documents cités:
**WO-A-90/16118**          **US-A- 5 553 102**

- **SELAKA BULUMULLA, SALEEM KASSAM, SANTOSH VENKATESH: "An Adaptive Diversity Receiver for OFDM in Fading Channels" ICC'98. 1998 IEEE INTERNATIONAL CONFERENCE ON COMMUNICATIONS, no. 3, 7 - 11 juin 1998, pages 1325-1329, XP002110961 Atlanta, GA, USA**

## Description

Le domaine de l'invention est celui de la réception de signaux numériques, dans des récepteurs mettant en oeuvre au moins deux voies de réception distinctes, c'est-à-dire deux voies alimentées par des flux de données distincts mais acheminant (au moins partiellement) les mêmes symboles source.

Ainsi, l'invention s'applique en particulier aux récepteurs mettant en oeuvre la diversité d'antennes, chaque antenne recevant le même signal émis, mais avec des perturbations éventuellement différentes, les canaux de transmission étant distincts. Plus généralement, l'invention s'applique dans tous les cas où deux flux de données distincts portant les mêmes symboles source sont disponibles (que ces flux soient similaires, ou transmis sur des bandes de fréquences et/ou dans des canaux différents, codés et/ou modulés de façons différentes, ...).

Un domaine d'application particulier de l'invention est celui de la diffusion hertzienne de signaux de télévision numérique (par exemple selon la norme en cours de développement DVB-T ou le projet dTTb), notamment à destination de récepteurs mobiles ou portables.

Dans cette situation, on a déjà proposé d'utiliser des techniques de diversité d'antennes. Ces techniques reposent sur la réception simultanée, sur plusieurs antennes, d'un même signal émis. On espère que, comparativement à un récepteur à antenne unique (sans diversité d'antennes), toutes les voies ne subissant pas les mêmes perturbations liées au canal de transmission, on pourra décoder de façon plus satisfaisante le signal obtenu en recombinant les signaux présents sur chaque antenne.

Cette recombinaison est réalisée par « pondération-sommation », c'est à dire en calculant à chaque instant une combinaison linéaire des signaux issus de chaque antenne. Cela peut être réalisé selon plusieurs approches se distinguant par le mode de calcul des pondérations associées.

La technique de combinaison à gain identique (Equal Gain Combining, EGC) somme les signaux en phase, la technique de combinaison par sélection (Selection Combining, SC) sélectionne le signal de plus fort rapport signal à bruit, la technique de combinaison à rapport maximal (Maximum Ratio Combining, MRC) pondère les signaux par le rapport de l'amplitude de leur atténuation et de la puissance du bruit additif que le canal leur fait subir, avant de les sommer en phase.

Il existe également des approches mettant en oeuvre un filtrage adaptatif de type gradient (employées aussi en égalisation), mais elles sont réputées complexes à mettre au point et trop lentes à converger pour bon nombre d'applications.

La technique de combinaison à rapport maximal (MRC) maximise (dans l'hypothèse de signaux subissant une atténuation (liée au canal) et un bruit additif (lié aux premiers étages d'amplification) indépendants) le rapport signal à bruit moyen obtenu après recombinaison et conduit à des résultats supérieurs à ceux des techniques d'EGC et de SC. C'est cette technique que l'on préfère généralement employer.

On trouve ainsi dans la littérature de nombreux exemples de systèmes de transmission employant une diversité d'antennes. Selon ces techniques connues la « pondération-sommation » est réalisée avant démodulation voire même avant le tuner (en radio-fréquences (RF)), afin que le récepteur ainsi obtenu ne contienne au total qu'un seul tuner, ce dernier étant un composant coûteux.

Cette approche est relativement bien adaptée au cas de signaux bande étroite (c'est-à-dire subissant sensiblement la même atténuation sur toute leur bande passante). Ainsi, le document US-5,533,102 en décrit la mise en oeuvre, dans le cadre d'un signal monoporteuse. Selon cette technique, la combinaison MRC délivre des décisions binaires. L'emploi de ces techniques sur des signaux large bande peut en revanche se révéler fortement sous-optimal, notamment du fait du risque d'évanouissements ou de perturbations sélectifs, n'affectant qu'une partie de la bande de fréquence concernée.

Par ailleurs, la technique MRC nécessitant une estimation du canal et la mise en phase des signaux, on renonce souvent à l'employer au profit de la technique SC. Mais, dans tous les cas où un problème de synchronisation du démodulateur lors du basculement d'une voie de réception à l'autre peut se poser.

On connaît également, par le document intitulé intitulé intitulé « Antenna Diversity for Digital Video Broadcasting » (J. G. W. Janssen et al. - document dTTb/WP3.2/Philips/24)), un système effectuant une recombinaison par sélection après démodulation multiporteuse (démodulation OFDM). Cette technique s'avère peu efficace en pratique, et son développement n'a pas été poursuivi.

L'invention a notamment pour objectif de pallier ces inconvénients de l'état de la technique.

Plus précisément, un objectif de l'invention est de fournir un dispositif et un procédé de réception exploitant au moins deux voies de réception, par exemple sous la forme d'une diversité d'antennes, qui soient plus efficaces, en termes de qualité de recombinaison, et donc de décodage final, que les techniques connues, notamment pour des signaux large bande.

Un autre objectif de l'invention est de fournir un tel dispositif et un tel procédé, qui soient simples à mettre en oeuvre, sans nécessiter d'adaptation complexe des structures des récepteurs connus.

Notamment, un objectif de l'invention est de fournir un tel dispositif et un tel procédé, qui exploitent les informations déjà disponibles dans les récepteurs, et qui soient en conformité avec les normes en cours de développement.

Ces objectifs, ainsi que d'autres qui apparaîtront par la suite, sont atteints selon l'invention à l'aide d'un dispositif de réception mettant en oeuvre au moins deux voies de réception alimentées par des flux de données acheminant chacun les mêmes symboles source, chacune desdites voies comprenant des moyens d'estimation, associant à chaque symbole source reçu une valeur estimée de voie et une information de confiance de voie correspondante. Selon l'invention, ce dispositif de réception comprend des moyens de combinaison desdites valeurs estimées de voie en une valeur estimée adaptée, ladite combinaison tenant compte desdites informations de confiance de voie pour pondérer lesdites valeurs estimées de voie.

Ainsi, selon l'invention, les opérations de « pondération-combinaison » sont effectuées juste avant le décodage à entrées pondérées. Le résultat est optimisé, puisqu'il tient compte des informations de confiance. La technique est simple à mettre en oeuvre, les informations exploitées étant déjà disponibles dans le récepteur.

De façon avantageuse, lesdits moyens d'estimation comprennent des moyens d'estimation du canal de transmission, délivrant lesdites informations de confiance de voie.

Il est clair cependant que d'autres types d'informations de confiance peuvent être utilisées.

Préférentiellement, lesdits moyens de combinaison associent à chacune desdites valeurs estimées adaptées une information de confiance adaptée, fonction desdites informations de confiance de voie. Celles-ci alimentent ensuite le décodeur à entrées pondérées.

Selon un mode de réalisation préférentiel de l'invention, ladite valeur estimée adaptée est calculée de la façon suivante :

$$\hat{x}_{Adap,n} = \left( \sum_{i=1}^{N} cnfd_{i,n} \times \hat{x}_{i,n} \right) / \left( \sum_{i=1}^{N} cnfd_{i,n} \right)$$

où :

$\hat{x}_n$ est la valeur estimée du symbole reçu sur la voie $i$ ;

$cnfd_{i,n}$ est l'information de confiance de voie correspondante ; et

$N$ est le nombre de voies.

Dans ce cas, ladite information de confiance adaptée peut avantageusement être calculée de la façon suivante :

$$cnfd_{Adap,n} = \sum_{i=1}^{N} cnfd_{i,n}$$

où :

$cnfd_{i,n}$ est l'information de confiance associée à la voie $i$ ; et

$N$ est le nombre de voies.

Les flux de données selon l'invention peuvent être de différents types. Selon un mode de réalisation préférentiel de l'invention, au moins un desdits flux de données est transmis à l'aide d'une modulation multi-porteuse.

En effet, comme on le verra par la suite, l'invention est particulièrement bien adaptée à ce type de modulation.

Dans ce cas, lesdits symboles source peuvent être acheminés par un sous-ensemble de l'ensemble des porteuses mises en oeuvre par ladite modulation multi-porteuse.

Selon un mode de réalisation avantageux de l'invention, le dispositif met en oeuvre au moins deux antennes (diversité d'antennes), alimentant des voies de réception distinctes.

L'invention est notamment bien adaptée aux dispositifs présentant une structure générale à trois niveaux :

- un premier module assurant la mise en forme et la démodulation du signal reçu, pour chacune desdites voies de réception ;
- un deuxième module assurant la détermination desdites valeurs estimées de voie et desdites informations de confiance correspondantes, pour chacune desdites voies de réception ;
- un troisième module unique alimenté par lesdits seconds modules, et assurant notamment la combinaison délivrant lesdites valeurs estimées adaptées et un décodage à entrées pondérées alimenté par lesdites valeurs estimées adaptées.

L'invention concerne également le procédé de réception mis en oeuvre par le dispositif décrit ci-dessus.

Un tel procédé, qui met en oeuvre au moins deux voies de réception alimentées par des flux de données acheminant chacun les mêmes symboles source, chacune desdites voies mettant en oeuvre une étape d'estimation du canal de transmission, associant à chaque symbole source reçu une valeur estimée de voie et une information de confiance de voie correspondante, comprend selon l'invention une étape de combinaison desdites valeurs estimées de voies délivrées par chacune desdites voies en une valeur estimée adaptée, ladite combinaison tenant compte desdites informations de confiance de voie pour pondérer lesdites valeurs estimées de voie.

L'invention concerne encore l'utilisation d'un dispositif de et/ou du procédé décrits ci-dessus, notamment pour la réception de données appartenant à au moins une des applications suivantes :

- diffusion de signaux de télévision numérique ;
- diffusion de signaux audio-numériques ;
- radio-téléphonie ;
- transmission de signaux de données.

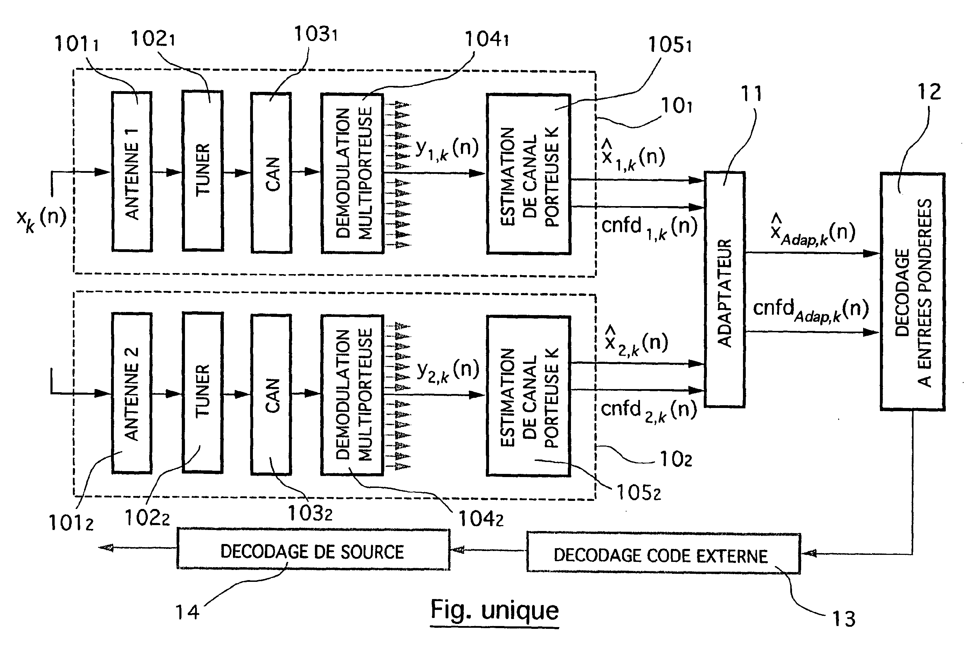

D'autres caractéristiques et avantages de l'invention apparaîtront plus clairement à la lecture de la description suivante d'un mode de réalisation préférentiel de l'invention, donné à titre de simple exemple illustratif et non limitatif, et de la figure unique annexée. Cette figure présente un schéma synoptique simplifié d'un récepteur, dans le cas particulier d'une modulation COFDM et d'une diversité à deux antennes (seul le traitement de la porteuse k étant illustré).

Comme indiqué précédemment, une caractéristique essentielle de l'invention est l'exploitation des informations destinées à un décodeur à entrées pondérées, présent dans la suite de la chaîne de traitement. On rappelle ci-après rapidement le principe de cette technique.

Soit $\hat{x}_n$, une estimation du $n^{\text{ième}}$ symbole à décoder et $cnfd_n$, une mesure de confiance dans cette estimation. Par décodage à entrées pondérées, nous désignons tout système de décodage qui à partir d'un ensemble de couples $\{(\hat{x}_n, cnfd_n)\}_n$, décode finalement un ensemble de symboles $\{\hat{c}_n\}_n$ en cherchant à minimiser :

$$\sum_n cnfd_n \times dist(\hat{c}_n - \hat{x}_n) \qquad (1)$$

où *dist* est une distance.

Un tel décodeur est souvent employé pour le décodage de codes correcteurs d'erreurs et permet par exemple le décodage à décision douces d'un code convolutif. Il est le plus souvent réalisé sous la forme d'un décodeur de Viterbi (qui permet de réaliser l'optimisation de l'équation (1) avec une complexité réduite).

Une des particularités de l'invention est de réaliser l'opération de « pondération-sommation » des différentes voies juste avant ce décodage à entrées pondérées, donc après le passage dans le tuner, après une éventuelle estimation du canal et surtout après une séparation des porteuses réalisée par une éventuelle démodulation multi-porteuses. Cela présente plusieurs avantages :

- cela permet, lors de la recombinaison des signaux provenant des différentes antennes, de travailler sur des signaux déjà démodulés (aucun problème de synchronisation ou de remise en phase des signaux n'apparaît alors) et de profiter des renseignements fournis par une éventuelle estimation de canal ;
- lorsqu'une modulation multi-porteuse est utilisée, et même dans le cas de l'émission d'un signal large bande (nécessaire par exemple pour transmettre les haut débits nécessaires à la transmission de signaux de télévision numérique), cela permet de travailler sur des signaux bande étroite.

Selon l'invention, la recombinaison est effectuée à l'aide d'un adaptateur placé en entrée du décodeur à entrées pondérées. Cet adaptateur exploite l'information de confiance affectée à chaque estimation délivrée par chaque voie, pour délivrer au décodeur à entrées pondérées une estimation globale optimisée (estimation adaptée), affectée elle-même d'une confiance adaptée.

Ainsi, la pondération affecte sélectivement chaque symbole reçu (et non la globalité du signal). Aucune information supplémentaire, par rapport à un récepteur classique, n'est nécessaire.

Comme cela apparaît dans l'exemple décrit ci-dessous, cette approche est bien adaptée aux systèmes multiporteuses, les données portées par chaque porteuse étant pondérées indépendamment. Il est clair cependant qu'elle peut s'appliquer également aux systèmes monoporteuses.

La figure unique présente un schéma synoptique simplifié d'un récepteur d'une modulation COFDM, mettant en oeuvre une diversité à deux antennes. Il est aisé de généraliser ce principe à plus de deux antennes, et plus généralement à deux ou plusieurs voies, telles que définies plus haut.

Par COFDM on entend notamment, dans ce mode de réalisation, l'association d'un code convolutif (dit code interne), d'un code en bloc (dit externe) et d'une modulation multi-porteuse OFDM. Un exemple d'un tel système est décrit pour la diffusion de télévision numérique hertzienne dans la norme DVB-T (voir par exemple le document ETSI « Digital Video Broadcasting (DVB) ; Framing structure, channel coding and modulation for digital terrestrial television (DVB-T)», Draft ETS 300744, mars 1997).

On décrit uniquement par la suite, par simplification, le traitement du $n^{ième}$ symbole émis, porté par la porteuse $k$, soit $x_k(n)$.

Le récepteur comprend deux voies $10_1$ et $10_2$, comprenant chacune une antenne $101_1$, $101_2$, et un tuner $102_1$, $102_2$, un convertisseur analogique-numérique CAN $103_1$, $103_2$, un module de démodulation multiporteuse $104_1$, $104_2$ et un module d'estimation $105_1$, $105_2$.

Ces différents éléments sont connus, et il n'est pas nécessaire de les décrire plus en détail. Le symbole $x_k(n)$ est reçu par chacune des antennes, et traite indépendamment par chacune des voies $10_1$ et $10_2$. Ainsi, chacun des modules de démodulation $104_1$, $104_2$ délivre l'information correspondante $y_{1,k}(n)$ et $y_{2,k}(n)$, à partir desquelles les modules d'estimation $105_1$ et $105_2$ produisent :

- une estimation de voie : $\hat{x}_{1,k}(n)$ et $\hat{x}_{2,k}(n)$;
- une information de confiance de voie : $cnfd_{1,k}(n)$ et $cnfd_{2,k}(n)$.

En d'autres termes, le signal en sortie de chaque antenne subit toutes les transformations assurées par un récepteur classique, jusqu'au décodage à entrées pondérées (exclu). On obtient alors pour chaque voie i une estimation bruitée $\hat{x}_{i,k}(n)$ des symboles transmis sur le canal, et une valeur de confiance $cnfd_{i,k}(n)$ dans cette estimation.

On pourra se reporter au document dTTb Module 3 (dTTb/M3/284 « System Specification for the Second dTTb Demonstrator », dTTb Module 3, Version 2.2, février 1996.) et à la norme DVB-T pour avoir un exemple de mode de calcul de ces confiances et estimations ainsi que de la mise en oeuvre du décodage à entrées pondérées associé.

Les informations $\hat{x}_{i,k}(n)$ et $cnfd_{i,k}(n)$ alimentent un module d'adaptation 11, élément nouveau selon l'invention, qui fournit au décodeur à entrées pondérées 12 une estimation et une confiance adaptée (optimisée).

Le décodage fonctionnant de façon synchrone sur chaque voie, une estimation améliorée des symboles transmis sur le canal, $\hat{x}_{Adap,k}(n)$, est obtenue en calculant la somme des estimations précédemment obtenues, pondérées par leur confiances respectives. La confiance $cnfd_{Adap,k}(n)$ associée à cette estimation est égale à la somme des confiances.

L'adaptateur 11 effectue donc les opérations suivantes :

$$\left. \begin{aligned} cnfd_{Adap,k}(n) &= \sum_i cnfd_{i,k}(n) \\ \hat{x}_{Adap,k}(n) &= \left( \sum_i cnfd_{i,k}(n) \times \hat{x}_{i,k}(n) \right) \Big/ \left( \sum_i cnfd_{i,k}(n) \right) \end{aligned} \right\} \forall k \text{ porteuse}, \forall n \text{ entier}$$

Bien sûr, il ne s'agit que d'un exemple, et d'autres méthodes de pondération peuvent être utilisées. Il est également possible de tenir compte d'autres informations (représentatives par exemple du type de données, d'une spécificité du canal, d'un taux d'erreur, ...) pour optimiser ces opérations.

Ensuite, le décodeur à entrées pondérées 12 assure classiquement le décodage du code interne. Toujours classiquement, le traitement se poursuit par le décodage du code externe 13, puis le décodage source 14.

Dans le cas particulier d'un décodage de Viterbi classique, ne prenant pas en compte l'estimation du canal, le recours à une décision « douce » est équivalent à l'utilisation d'une valeur estimée « dure » du symbole transmis, associée à une mesure de confiance dans cette estimation. Cette confiance est alors, par exemple, fonction de la loi (supposée) du bruit affectant la transmission et de la distance entre la valeur estimée « douce » et la valeur estimée « dure » choisie.

Ainsi, la notion de « valeur estimée de voie » selon l'invention peut être indifféremment douce ou dure. Par ailleurs, l'information de confiance peut être de tout type adéquat, et non exclusivement issue d'une estimation de canal.

Comme déjà mentionné, l'invention s'applique à toutes les situations où plusieurs voies doivent être traitées, et notamment pour le traitement de P de N flux de données traités provenant d'un signal transmis par modulation multi-porteuses (distinct ou pas pour chaque flux) et contenant l'information transportée par un sous-ensemble (pas forcement identique pour chaque flux) de l'ensemble des porteuses mises en oeuvre dans ce signal.

**Revendications**

1. Dispositif de réception d'un signal multiporteuse, formé par un ensemble de fréquences porteuses, ledit dispositif mettant en oeuvre au moins deux voies de réception $(10_1, 10_2)$ alimentées par des flux de données acheminant chacun les mêmes symboles source, chacune desdites voies comprenant des moyens d'estimation $(105_1, 105_2)$, associant à chaque symbole source reçu une valeur estimée de voie et une information de confiance de voie correspondante, un symbole source étant acheminé par un sous-ensemble dudit ensemble de fréquences porteuses, **caractérisé en ce qu'**il comprend des moyens de combinaison (11) desdites valeurs estimées de voie délivrant :

   - une valeur estimée adaptée, obtenue à partir desdites valeurs estimées de voie, en tenant compte desdites informations de confiance de voie pour pondérer lesdites valeurs estimées de voie ; et
   - une information de confiance adaptée, fonction desdites informations de confiance de voie,

   et des moyens de décodage (12) à entrées pondérées, alimentés par lesdits moyens de combinaison.

2. Dispositif de réception, selon la revendication 1, **caractérisé en ce que** lesdits moyens d'estimation $(105_1, 105_2)$ comprennent des moyens d'estimation du canal de transmission, délivrant lesdites informations de confiance de voie.

3. Dispositif de réception selon l'une quelconque des revendications 1 et 2, **caractérisé en ce que** ladite valeur estimée adaptée est calculée de la façon suivante :

$$\hat{x}_{Adap,n} = \left( \sum_{i=1}^{N} cnfd_{i,n} \times \hat{x}_{i,n} \right) / \left( \sum_{i=1}^{N} cnfd_{i,n} \right)$$

   où :

   $\hat{x}_n$ est la valeur estimée du symbole reçu sur la voie $i$ ;
   $cnfd_{i,n}$ est l'information de confiance de voie correspondante ; et
   $N$ est le nombre de voies.

4. Dispositif de réception selon l'une quelconque des revendications 1 à 3, **caractérisé en ce que** ladite information de confiance adaptée est calculée de la façon suivante :

$$cnfd_{Adap,n} = \sum_{i=1}^{N} cnfd_{i,n}$$

   où :

   $cnfd_{i,n}$ est l'information de confiance associée à la voie $i$ ; et
   $N$ est le nombre de voies.

5. Dispositif de réception selon l'une quelconque des revendications 1 à 4, **caractérisé en ce qu'**il met en oeuvre au moins deux antennes $(101_1, 101_2)$, alimentant des voies de réception distinctes.

6. Dispositif de réception selon l'une quelconque des revendications 1 à 5, **caractérisé en ce que** chacune desdites voies de réception comprend un premier module assurant la mise en forme et la démodulation du signal reçu et un second module assurant la détermination desdites valeurs estimées de voie et desdites informations de confiance correspondantes,

ledit dispositif comprenant en outre un module unique alimenté par lesdits seconds modules, et assurant notamment la combinaison (11) délivrant lesdites valeurs estimées adaptées et un décodage à entrées pondérées (12) alimenté par lesdites valeurs estimées adaptées.

**7.** Procédé de réception d'un signal multiporteuse formé par un ensemble de fréquences porteuses mettant en oeuvre au moins deux voies de réception alimentées par des flux de données acheminant chacun les mêmes symboles source, chacune desdites voies mettant en oeuvre une étape d'estimation du canal de transmission associant à chaque symbole source reçu une valeur estimée de voie et une information de confiance de voie correspondante, un symbole source étant acheminé par un sous-ensemble dudit ensemble de fréquences porteuses,
**caractérisé en ce qu'**il comprend :

- une étape de combinaison délivrant :

- une valeur estimée adaptée, obtenue à partir desdites valeurs estimées de voie, en tenant compte desdites informations de confiance de voie pour pondérer lesdites valeurs estimées de voie ; et
- une information de confiance adaptée, fonction desdites informations de confiance de voie.

- une étape de décodage à entrées pondérées, alimentée par ladite étape de combinaison.

**8.** Utilisation d'un dispositif de réception selon l'une quelconque des revendications 1 à 6 et/ou du procédé selon la revendication 7, pour la réception de données appartenant à au moins une des applications suivantes :

- diffusion de signaux de télévision numérique ;
- diffusion de signaux audio-numériques ;
- radio-téléphonie ;
- transmission de signaux de données.

**Claims**

**1.** A device for receiving a multicarrier signal formed by a set of carrier frequencies, said device utilising at least two receiving channels ($10_1$, $10_2$) fed by data streams each conveying the same source symbols, each of said channels including estimation means ($105_1$, $105_2$) associating with each source symbol received an estimated channel value and a corresponding channel-confidence datum,
a source symbol being conveyed by a subset of said set of carrier frequencies,
**characterised in that** said device includes means for combination (11) of said estimated channel values outputting:

- an adapted estimated value, obtained from said estimated channel values, taking account of said channel-confidence data in order to weight said estimated channel values; and
- an adapted confidence datum, depending upon said channel-confidence data,

and decoding means (12) having weighted inputs, said decoding means being fed by said combination means.

**2.** Receiving device according to Claim 1, **characterised in that** said estimation means ($105_1$, $105_2$) include means for estimating the transmission channel, outputting said channel-confidence data.

**3.** Receiving device according to any one of Claims 1 and 2, **characterised in that** said adapted estimated value is calculated in the following way:

$$\hat{x}_{Adap,\,n} = \left( \sum_{i=1}^{N} cnfd_{i,\,n} \times \hat{x}_{i,\,n} \right) / \left( \sum_{i=1}^{N} cnfd_{i,\,n} \right)$$

where:

$\hat{x}_n$ is the estimated value of the symbol received on channel $i$;

$cnfd_{i,n}$ is the corresponding channel-confidence datum; and
$N$ is the number of channels.

4. Receiving device according to any one of Claims 1 to 3, **characterised in that** said adapted confidence datum is calculated in the following way:

$$cnfd_{Adap,\,n} = \sum_{i=1}^{N} cnfd_{i,\,n}$$

where:

$cnfd_{i,n}$ is the confidence datum associated with channel $i$; and
$N$ is the number of channels.

5. Receiving device according to any one of Claims 1 to 4, **characterised in that** it utilises at least two antennae ($101_1$, $101_2$) feeding distinct receiving channels.

6. Receiving device according to any one of Claims 1 to 5, **characterised in that** each one of said receiving channels includes a first module ensuring the shaping and the demodulation of the signal received and a second module ensuring the determination of said estimated channel values and of said corresponding confidence data,
said device including, in addition, a single module fed by said second modules and ensuring, in particular, the combination (11) outputting said adapted estimated values and a decoding unit having weighted inputs (12), said decoding unit being fed by said adapted estimated values.

7. A process for receiving a multicarrier signal formed by a set of carrier frequencies, utilising at least two receiving channels fed by data streams each conveying the same source symbols, each of said channels utilising a stage of estimation of the transmission channel linking to each source symbol received an estimated channel value and a corresponding channel-confidence datum,
a source symbol being conveyed by a subset of said set of carrier frequencies,
**characterised in that** said process comprises:

- a combination stage outputting:

- an adapted estimated value, obtained from said estimated channel values, taking account of said channel-confidence data in order to weight said estimated channel values; and
- an adapted confidence datum, depending upon said channel-confidence data.

- a decoding stage having weighted inputs, said decoding stage being fed by said combination stage.

8. Use of a receiving device according to any one of Claims 1 to 6 and/or use of the process according to Claim 7 for the reception of data pertaining to at least one of the following applications:

- broadcasting of digital-television signals;
- broadcasting of digital-audio signals;
- radiotelephony;
- transmission of data signals.

**Patentansprüche**

1. Vorrichtung zum Empfang eines Mehrträgersignals, das durch eine Gruppe von Trägerfrequenzen gebildet ist, wobei die Vorrichtung mindestens zwei Empfangswege ($10_1$, $10_2$) ausführt, in die Datenflüsse eingegeben werden, von denen jeder die gleichen Quellsymbole transportiert, wobei jeder der Wege Schätzungsmittel ($105_1$, $105_2$) umfasst, die jedes empfangene Quellsymbol mit einem geschätzten Wegwert und einer entsprechenden Wegvertrauensinformation verknüpfen, wobei ein Quellsymbol durch eine Untergruppe der Gruppe von Trägerfrequenzen transportiert wird,
**dadurch gekennzeichnet, dass** sie Mittel zum Kombinieren (11) der geschätzten Wegwerte umfasst, die Folgendes liefern:

- einen angepassten geschätzten Wert, der ausgehend von den geschätzten Wegwerten unter Berücksichtigung der Wegvertrauensinformationen erhalten wird, um die geschätzten Wegwerte zu gewichten; und
- eine in Abhängigkeit von den Wegvertrauensinformationen angepasste Vertrauensinformation,

und Decodierungsmittel (12) mit gewichteten Eingängen, in die durch die Kombinationsmittel eingegeben wird.

2. Empfangsvorrichtung nach Anspruch 1,
**dadurch gekennzeichnet, dass** die Schätzungsmittel ($105_1$, $105_2$) Mittel zum Schätzen des Übertragungskanals umfassen, die die Wegvertrauensinformationen liefern.

3. Empfangsvorrichtung nach einem der Ansprüche 1 und 2,
**dadurch gekennzeichnet, dass** der angepasste geschätzte Wert auf die folgende Weise errechnet wird:

$$\hat{\chi}_{Adap,n} = \left( \sum_{i=1}^{N} cnfd_{i,n} \times \hat{x}_{i,n} \right) / \left( \sum_{i=1}^{N} cnfd_{i,n} \right)$$

wo:

$\hat{x}$ der geschätzte Wert des auf dem Weg $i$ empfangenen Symbols ist;
$cnfd_{i,n}$ die entsprechende Wegvertrauensinformation ist; und
$N$ die Anzahl der Wege ist.

4. Empfangsvorrichtung nach einem der Ansprüche 1 bis 3,
**dadurch gekennzeichnet, dass** die angepasste Vertrauensinformation auf die folgende Weise errechnet wird:

$$cnfd_{Adap,n} = \sum_{i=1}^{N} cnfd_{i,n}$$

wo:

$cnfd_{i,n}$ die mit dem Weg $i$ verknüpfte Vertrauensinformation ist; und
$N$ die Anzahl der Wege ist.

5. Empfangsvorrichtung nach einem der Ansprüche 1 bis 4,
**dadurch gekennzeichnet, dass** sie mindestens zwei Antennen ($101_1$, $101_2$) ausführt, die in getrennte Empfangswege eingeben.

6. Empfangsvorrichtung nach einem der Ansprüche 1 bis 5,
**dadurch gekennzeichnet, dass** jeder der Empfangswege ein erstes Modul, das die Transformation und Demodulation des empfangenen Signals gewährleistet, und ein zweites Modul, das die Bestimmung der geschätzten Wegwerte und der entsprechenden Vertrauensinformationen gewährleistet, umfasst,
wobei die Vorrichtung des Weiteren ein einziges Modul umfasst, in das durch die zweiten Module eingegeben wird, und das insbesondere die Kombination (11) gewährleistet, wobei es die angepassten geschätzten Werte und eine Decodierung mit gewichteten Eingängen (12) liefert, in die die angepassten geschätzten Werte eingegeben werden.

7. Verfahren zum Empfang eines Mehrträgersignals, das durch eine Gruppe von Trägerfrequenzen gebildet ist, das mindestens zwei Empfangswege ausführt, in die Datenflüsse eingegeben werden, von denen jeder die gleichen Quellsymbole transportiert, wobei jeder der Wege einen Schritt zur Schätzung des Übertragungskanals ausführt, indem jedes empfangene Quellsymbol mit einem geschätzten Wegwert und einer entsprechenden Wegvertrauensinformation verknüpft wird, wobei ein Quellsymbol durch eine Untergruppe der Gruppe von Trägerfrequenzen transportiert wird,

**dadurch gekennzeichnet, dass** es Folgendes umfasst:

- einen Kombinationsschritt, der Folgendes liefert:

  - einen angepassten geschätzten Wert, der ausgehend von den geschätzten Wegwerten unter Berücksichtigung der Wegvertrauensinformationen erhalten wird, um die geschätzten Wegwerte zu gewichten; und
  - eine in Abhängigkeit von den Wegvertrauensinformationen angepasste Vertrauensinformation,

- einen Schritt zum Decodieren mit gewichteten Eingängen, in den durch den Kombinationsschritt eingegeben wird.

8. Verwendung einer Empfangsvorrichtung nach einem der Ansprüche 1 bis 6 und/oder eines Verfahrens nach Anspruch 7 zum Empfang von Daten, die zu mindestens einer der folgenden Anwendungen gehören:

  - Übertragung von Digitalfernsehsignalen;
  - Übertragung von digitalen Audiosignalen;
  - Funktelefonie;
  - Übertragung von Datensignalen.

Fig. unique